Europäisches Patentamt

European Patent Office

Office européen des brevets

(19)

(11) Veröffentlichungsnummer: **0 156 297**
**B1**

(12) # EUROPÄISCHE PATENTSCHRIFT

(45) Veröffentlichungstag der Patentschrift: **22.08.90**

(51) Int. Cl.⁵: **H 04 M 1/02,** H 04 M 1/66

(21) Anmeldenummer: **85103224.3**

(22) Anmeldetag: **20.03.85**

(54) Mobilfunkgerät.

(30) Priorität: **22.03.84 DE 3410477**

(43) Veröffentlichungstag der Anmeldung:
**02.10.85 Patentblatt 85/40**

(45) Bekanntmachung des Hinweises auf die
Patenterteilung:
**22.08.90 Patentblatt 90/34**

(84) Benannte Vertragsstaaten:
**DE FR GB IT SE**

(56) Entgegenhaltungen:
**US-A-4 153 822**

**PATENTS ABSTRACTS OF JAPAN, Band 5, Nr.
103 (E-64)775r, 3. Juli 1981; & JP-A-56 46 353**

**TECHNICAL DIGEST, Nr. 60, Oktober 1980,
Seiten 23,24, New York, US; O. WAGNER: "Lock
for "call director" telephone set"**

(73) Patentinhaber: **ALCATEL N.V.
Strawinskylaan 537 (World Trade Center)
NL-1077 XX Amsterdam (NL)**
(84) **FR GB IT SE**

(73) Patentinhaber: **Standard Elektrik Lorenz
Aktiengesellschaft
Lorenzstrasse 10
D-7000 Stuttgart 40 (DE)**
(84) **DE**

(72) Erfinder: **Goldhorn, Bruno
Narrenbergstrasse 1
D-7531 Keltern-Dietlingen (DE)**
Erfinder: **Stapelfeldt, Rolf
Goethering 53
D-7537 Remchingen-Singen (DE)**

(74) Vertreter: **Gähr, Hans-Dieter, Dipl.-Ing. (FH) et al
Standard Elektrik Lorenz AG Patent- und
Lizenzwesen Postfach 30 09 29
D-7000 Stuttgart 30 (DE)**

Courier Press, Leamington Spa, England.

**Beschreibung**

Die Erfindung betrifft ein Mobilfunkgerät, insbesondere ein Autotelefon mit einer Handapparat-Aufnahme und einem einrastbaren Handapparat, bei dem auf der einen Seite Hör- und Sprechmuschel und auf der anderen Seiten eine Wähltastatur angeordnet ist.

Ein derartiges Autotelefon ist aus der US—A—4,153,822 bekannt. Der Handapparat dieser Konstruktion hat die übliche gewölbte Gestalt mit Hör- und Sprechmuschel an den Enden auf der Innenseite sowie auf der davon abgewandten Außenseite eine Wähltastatur, die herausziehbar bzw. einschiebbar angeordnet ist. Ersatzweise kann der Ausschnitt für die Wähltastatur im Handapparat durch eine Blindabdeckung verschlossen werden. Für den Handapparat ist eine passende Auflage vorgesehen, die aus einem kappenartigen Formteil und einer Bodenplatte besteht. Die Bodenplatte kann am Armaturenbrett oder auf einer Konsole zwischen den Vordersitzen befestigt werden. Ferner weist die Auflage federbelastete Rastmittel für die Halterung des Handapparates auf.

Aus der DE—AS 30 15 050 ist ein Bediengerät für ein Mobilfunkgerät bekannt, das aus einem Telefon-Handapparat besteht, in dem alle elektrischen und mechanischen Bauelemente des Telefons wie Wähltasten, Ziffernanzeige, Wecker, Gabel und Hauptschalter untergebracht sind. Der Handapparat ist aus zwei Halbschalen zusammengesetzt, wovon das eine Gehäuseteil an einem Ende die Hörmuschel und am anderen Ende die Sprechmuschel aufweist und alle Bauelemente außer Wähltasten und Anzeige enthält, während in dem anderen, äußeren Gehäuseteil die Wähltastatur, die Anzeige und weitere Bedienelemente, unter anderem der Hauptschalter zum Ein- und Ausschalten des ganzen Mobilfunkgerätes angeordnet sind. Durch einen manuell bedienbaren Gabelschalter im Handapparat ist dieser sehr freizügig verwendbar. Beschränkt wird diese Freizügigkeit lediglich durch die Länge des Anschlußkabels, das über eine Steckverbindung die Verbindung zum Funkteil herstellt. Die Auflage für den Handapparat hat keine elektrischen Verbindungen, sie dient lediglich der bedarfsweisen mechanischen Halterung des Handapparates. Sie ist so ausgebildet, daß sie für liegende oder hängende Befestigung des Handapparates geeignet ist.

Ein ähnlich gestalteter Handapparat mit Bedien- und Anzeigeelement auf der Außenseite ist aus der DE—OS 21 23 596 bekannt, wobei es besonders um die benutzerfreundliche Ausbildung der Tasten bzw. der Mulden, in denen die Taste angeordnet sind, geht. Zum leichteren Erfühlen der Tasten sind die Mulden z.B. in unterschiedlichen geometrischen Formen oder mit verschiedenem Relief ausgeführt.

Es ist außerdem bekannt, die Wähl- und anderen Bedientasten sowie die Anzeige in der Frontplatte eines quaderförmigen Gehäuses anzuordnen, das wie ein Autoradio im Armaturenbrett eines Kraftwagens eingesetzt werden kann (EU—PA 0 087 788). Das Gehäuse enthält die elektrischen Bauelemente des Autotelefons und ist in einen Einbaurahmen einschiebbar gestaltet, der fest eingebaut ist. Die elektrischen Verbindungen mit der Stromzufuhr und der ubertragungseinrichtung werden beim Einschieben durch Steckverbinder hergestellt.

Der Erfindung liegt die Aufgabe zugrunde, ein Autotelefon mit möglichst geringem Raumbedarf zu schaffen, das so in einem Kraftwagen untergebracht werden kann, daß es einhändig und einfach zu bedienen ist und nicht störend bei anderen Handgriffen empfunden wird. Gelöst wird diese Aufgabe durch die im Kennzeichen des Anspruchs 1 angegebenen Merkmale. Der Einbau des Autotelefons im Armaturenbrett hat sich bislang noch als am wenigsten störend erwiesen, dies gilt vor allem für den Handapparat als dem zwangsläufig am weitesten hervorstehenden Bauteil. Besonders vorteilhaft ist bei der erfindungsgemäßen Ausführung, daß der Handapparat quer liegend, aber hochkant, d.h. mit den beiden Muscheln der Frontplatte zugewandt an dieser einrastbar gehaltert ist, da er in dieser Lage so weit wie möglich integriert ist. Dagegen sind die üblicherweise auf der Mittelkonsole angebrachten Autotelefone oft in unmittelbarer Nachbarschaft der Knüppelschaltung und/oder der Handbremse des Fahrzeugs angebracht, so daß dem Griff nach dem Telefon der Schalthebel oder die Handbremse hindernd im Wege steht. Da außerdem der Raum für den Radioeinbau in jedem Armaturenbrett vorgesehen ist, ist dort ein problemloser und kompakter Einbau besonders einfach. Bedien- und Anzeigeelemente liegen an einer Stelle dicht beieinander und im Blickfeld des Fahrers.

Vorteilhafte Weiterbildungen sind in den Unteransprüchen angegeben. Bemerkenswert ist dabei das Schloß im Handapparat, mit dem das Gerät gebrauchsunfähig gemacht werden kann, indem das Autotelefon stromlos geschaltet und gegebenenfalls der Handapparat in der Halterung gesperrt wird, so daß er nicht abgenommen werden kann.

Die Erfindung wird an zwei Ausführungsbeispielen beschrieben, die in den zugehörigen Zeichnungen dargestellt sind. Darin zeigen:

Fig. 1 eine perspecktivische Ansicht eines erfindungsgemäßen Autotelefons mit eingerastetem Handapparat und

Fig. 2 ebenfalls in perspektivischer Ansicht eine weitere Ausführung des Autotelefons mit geänderter Frontplatte.

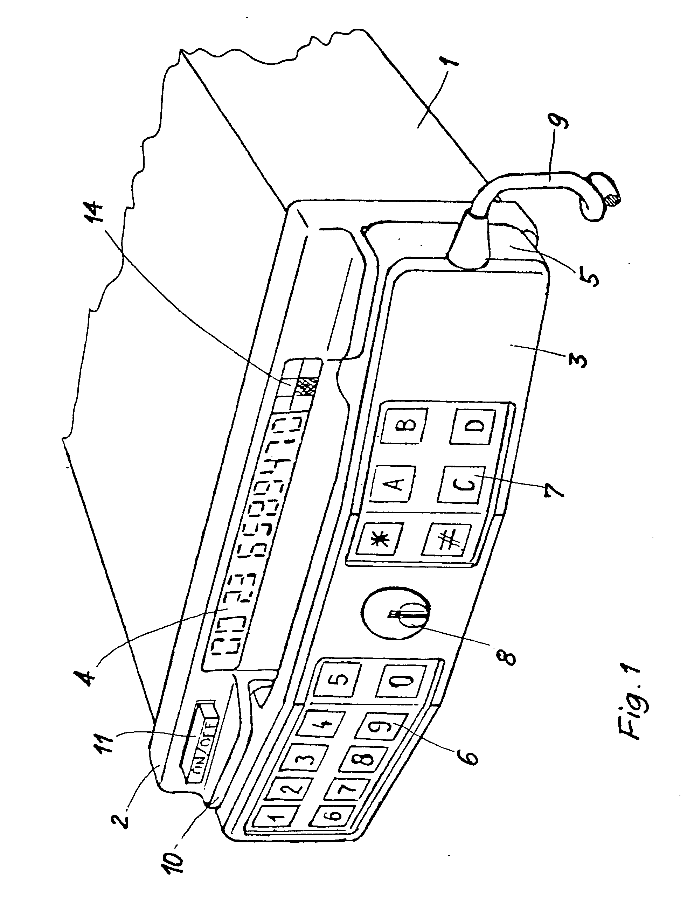

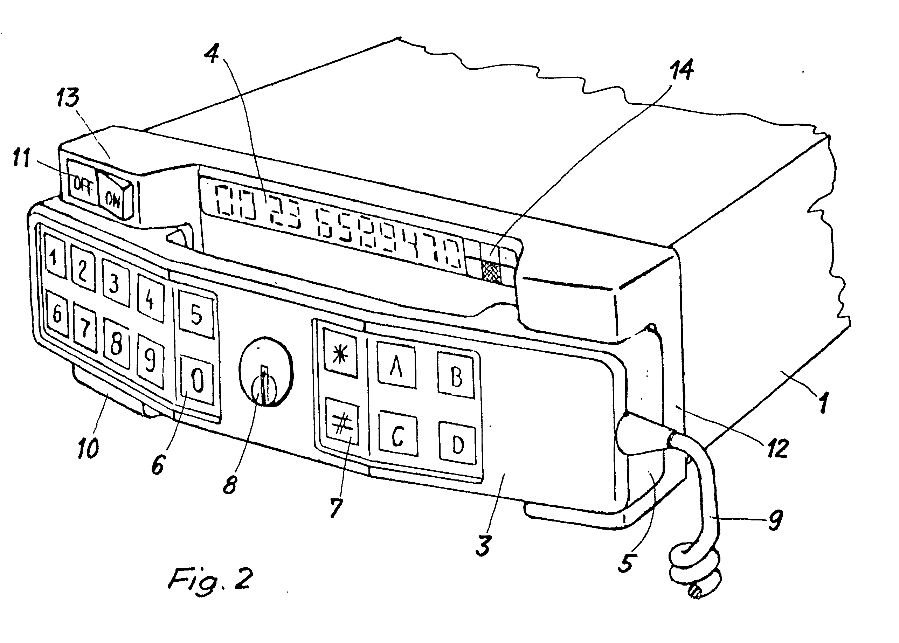

Die Figuren 1 und 2 zeigen das Autotelefon jeweils schräg von vorn. Dabei ist das quaderförmige Gehäuse 1 des Gerätes nut teilweise abgebildet. Die es vorn abschließende Frontplatte 2 bzw. 12 ist rechteckig und im unteren Teil mit einer Aufnahme für den Telefon-Handapparat 3 versehen, während darüber, also gut sichtbar, eine digitale Rufnummernanzeige 4 und eine Lampenanzeige 14 angeordnet ist. Für gleiche Teile sind bei beiden Ausführung in den Figuren 1 und 2 gleiche Bezugszeichen verwendet. Das Gehäuse 1 entspricht in seiner Form dem eines handelsüblichen Autoradios, das zum Einbau in das Armaturenbrett eines Kraftwagens geeignet ist. Ähnliches gilt für die Frontplatte 2 oder 12, die im Grundriß der eines solchen Autoradios entspricht.

Der Handapparat 3 ist den bei stationären Telefonen üblichen ähnlich, aber besonders schmal und flach gestaltet. Mit den beiden Muscheln 5, die die Hör- bzw. Sprechkapsel enthalten, ist der Handapparat an der Frontplatte 2 einrastbar. Auf seiner anderen Seite, also der Außenseite, sind die Wähltasten 6 und die Zusatztasten 7 in zwei Gruppen getrennt so angebracht, daß sie in der waagrechten Lage des Handapparates lesbar sind. Zwischen beiden Tastengruppen sitzt im mittleren Bereich des Handapparates 3 ein Schloß 8, mit dem das Gerät abgeschlossen werden kann. Dies geschieht durch eine mechanische Verriegelung des Handapparates an der Frontplatte 2, so daß er nicht abgenommen werden kann und/oder durch Abschalten der Wähltasten 6 und 7, um einen Wählvorgang zu unterbinden. Noch besser ist die Abschaltung der Stromzufuhr mittels des Schlosses 8, so daß das ganze Gerät stromlos ist. Alle Hauptbedienfunktionen sind somit im Handapparat untergebracht. Die elektrische Verbindung des Handapparates 3 mit dem Gerät erfolgt mit Hilfe des Kabels 9, das an dem die Sprechkapsel enthaltenden Ende des Handapparates um 90° frei schwenkbar austritt. Seltener benötigte Einstellelemente (z.B. Leuchtstärke der Anzeigen, Lautstärke usw.) können in der Frontplatte 2 durch den Handapparat abdeckbar angeordnet sein.

Als Führung beim Ablegen (Einrasten) des Handapparates 3 sind an der Frontplatte 2 bei der Ausführung nach Fig. 1 im Bereich der beiden Muscheln 5 schmale Rippen 10 über und unter dem Handapparat angebracht. In diesem Bereich befinden sich auch die Rastelemente zum Halten des Handapparates (nicht dargestellt). Über der linken oberen Rippe 10 sitzt bei dieser Ausführung der Hauptschalter 11, daneben und mittig zwischen linkem und rechtem Steg die Rufnummernanzeige 4 und die Lampenanzeige 14.

Bei der Ausführung nach Fig. 2 sind die oberen Rippen 13 so breit gestaltet, daß sie die restliche Höhe der Frontplatte 12 über dem Handapparat 3 einnehmen. Der Hauptschalter 11 ist hier in die linke Rippe 13 integriert.

Die Gestaltung von Frontplatte 2 und Handapparat 3 erfüllt sicherheitstechnische Forderungen für Kraftfahrzeuge. Die Wahl einer Rufnummer erfolgt bei eingerastetem Handapparat, ebenso die Signalisierung eines Anrufes. Um die Bedienung bei Nacht zu erleichtern, sind die Bedienelemente (4, 6, 7, 11) indirekt beleuchtet.

Die Gestaltung des Gerätes ermöglicht auch, es in einer Tasche mit integrierter Antenne unterzubringen, so daß es als tragbares Gerät benutzt werden kann. Der Leistungsverstärker des Gerätes wird in diesem Fall gegen ein Batterieteil ausgetauscht.

## Patentansprüche

1. Mobilfunkgerät, insbesondere Autotelefon mit einer Handapparat-Aufnahme und einem einerastbaren Handapparat, der Hör- und Sprechmuschel auf der einen Seite und eine Wähltastatur auf der anderen, äußeren Seite aufweist, dadurch gekennzeichnet, daß die Handapparat-Aufnahme (10, 13) an der Frontplatte (2, 12) eines in das Armaturenbrett eines Kraftwagens einsetzbaren, quaderförmigen, Sender und Empfänger enthaltenden Gehäuses (1) derart angeordnet ist, daß der Handapparat (3) quer liegend mit seinen Muscheln (5) an der Frontplatte gehalten ist und die Tasten (6, 7) in dieser eingerasteten, Lage, direkt lesbar und bedienbar sind.

2. Mobilfunkgerät nach Anspruch 1, dadurch gekennzeichnet, daß die Handapparat-Aufnahme (10, 13) von vorspringenden Rippen gebildet wird, die den Handapparat (3) im Bereich der beiden Muscheln (5) oben und unten zumindest teilweise umgreifen.

3. Mobilfunkgerät nach Anspruch 2, dadurch gekennzeichnet, daß über dem Handapparat (3) in der Frontplatte (2, 12) eine Rufnummernanzeige (4), Lampenanzeigen (14) und ein Hauptschalter (11) angeordnet sind.

4. Mobilfunkgerät nach Anspruch 3, dadurch gekennzeichnet, daß der Hauptschalter (11) in der einen Rippe (13) angeordnet ist.

5. Mobilfunkgerät nach Anspruch 1, dadurch gekennzeichnet, daß auf der Außenseite des Handapparates (3) ein Schloß (8) eingelassen ist, mit dem das Gerät verschließbar ist.

6. Mobilfunkgerät nach Anspruch 5, dadurch gekennzeichnet, daß durch das Schloß (8) das Gerät stromlos schaltbar ist.

7. Mobilfunkgerät nach Anspruch 5 und 6, dadurch gekennzeichnet, daß durch das Schloß (8) der Handapparat (3) in der Handapparat-Aufnahme (10, 13) blockierbar ist.

8. Mobilfunkgerät nach den vorhergehenden Ansprüche, dadurch gekennzeichnet, daß Frontplatte (2, 12) und Handapparat (3) indirekt und in der Lichtstärke regelbar beleuchtet sind.

## Revendications

1. Appareil mobile pour transmission radio, notamment appareil téléphonique pour véhicule automobile comportant un réceptacle de combiné et en combiné emboîtable, comportant d'un côté le pavillon d'écouteur et le pavillon de microphone et de l'autre côté extérieur un clavier à touches de sélection, caractérisé en ce que le réceptacle de combiné (10, 13) est disposé dans la plaque avant (2, 12) d'un boîtier (1) de forme parallélépipédique, contenant un émetteur et un récepteur et pouvant être monté dans le tableau de bord d'un véhicule automobile, de telle sorte que le combiné (3) soit maintenu en s'appuyant transversalement avec ses pavillons (5) sur la plaque avant et que les touches (6, 7) puissent être directement lues et actionnées dans cette position d'emboîtement.

2. Appareil mobile pour transmission radio selon la revendication 1, caractérisé en ce que le réceptable de combiné (10, 13) est pourvu de nervures faisant saillie vers l'avant et qui s'accrochent, au moins partiellement, en haut et en bas, sur le combiné (3) dans la zone des deux pavillons (5).

3. Appareil mobile pour transmission radio selon la revendication 2, caractérisé en ce qu'il est prévu au-dessus du combiné (3) dans la plaque avant (2, 12) un indicateur (4) de numéro d'appels, un indicateur à lampes (14) et un interrupteur principal (11).

4. Appareil mobile pour transmission radio selon la revendication 3, caractérisé en ce que l'interrupteur principal (11) est disposé dans une des nervures (13).

5. Appareil mobile pour transmission radio selon la revendication 1, caractérisé en ce qu'il est prévu sur le côté extérieur du combiné (3) une serrure (8) à l'aide de laquelle l'appareil peut être verrouillé.

6. Appareil mobile pour transmission radio selon la revendication 5, caractérisé en ce que, au moyen de la serrure (8) l'alimentation en courant de l'appareil peut être coupée.

7. Appareil mobile pour transmission radio selon une des revendications 5 et 6, caractérisé en ce que, au moyen de la serrure (8), le combiné (3) peut être bloqué dans son réceptacle (10, 13).

8. Appareil mobile pour transmission radio selon les revendications précédentes, caractérisé en ce que la plaque avant (2, 12) et le combiné (3) sont éclairés indirectement, avec une intensité lumineuse réglable.

## Claims

1. Mobile radio set, particularly automobile radiotelephone, comprising a handset cradle and a handset which is lockable to the handset cradle and has an earpiece and a mouthpiece on one side and a keypad on the other, outer side, characterized in that the handset cradle (10, 13) is mounted across the front panel (2, 12) of a rectangular-parallelepiped-shaped case (1) housing a transmitter and a receiver and insertable into the dashboard of an automobile, such that the handset (3) is held in a horizontal position at the front panel via its earpiece and mouthpiece (5), and that the keys (6, 7) are directly readable and operable in this locked position of the handset (3).

2. A mobile radio set as claimed in claim 1, characterized in that the handset cradle (10, 13) is formed by protuberant ribs which grasp at least part of the top and the underside of the handset (3) in the areas of the earpiece and the mouthpiece (5).

3. A mobile radio set as claimed in claim 2, characterized in that above the handset (3), the front panel (2, 12) contains a dialled-number display (4), lamp indicators (14), and a master switch (11).

4. A mobile radio set as claimed in claim 3, characterized in that the master switch (11) is contained in one of the ribs (13).

5. A mobile radio set as claimed in claim 1, characterized in that a lock (8) with which the set can be locked up is let into the handset (3) on the outer side thereof.

6. A mobile radio set as claimed in claim 5, characterized in that by means of the lock (8), power can be removed from the set.

7. A mobile radio set as claimed in claims 5 and 6, characterized in that by means of the lock (8), the handset (3) can be latched in the handset cradle (10, 13).

8. A mobile radio set as claimed in any one of the preceding claims, characterized in that the front panel (2, 12) and the handset (3) are backlighted, and that the intensity of illumination is variable.

Fig. 1

Fig. 2

EP 0 156 297 B1